# EUROPÄISCHE PATENTANMELDUNG

(11) **EP 1 321 564 A1**
(43) Veröffentlichungstag der Anmeldung: **25.06.2003**
(21) Anmeldenummer: 02027133.4
(22) Anmeldetag: 04.12.2002
(51) Int. Cl.: D06F 58/28, D06F 39/00, G01N 22/04, G01F 23/284

(54) **Wäschepflegeeinrichtung mit Feuchtsensor und Verfahren zur Bestimmung des Feuchtegehalts von Wäsche**

(30) Priorität: 21.12.2001 DE 10163199
(71) Anmelder: BSH Bosch und Siemens Hausgeräte GmbH, 81669 München (DE)
(72) Erfinder: Fochem, Manfred, 10629 Berlin (DE); Heide, Patric, Dr., 85579 Neubiberg (DE); Lahrmann, Andreas, Dr., 14193 Berlin (DE); Nitschmann, Kai, 13187 Berlin (DE); Vossiek, Martin, Dr., 31139 Hildesheim (DE); Wagner, Martin, 81377 München (DE)

(57) **Zusammenfassung**

Für eine Wäschepflegeeinrichtung wird ein Mikrowellensensor vorgeschlagen, bei dem ein Mikrowellenresonator mit einer Sonde vorgesehen ist, der ein Streufeld in den Innenraum der die Wäsche enthaltenden Wäschepflegeeinrichtung einkoppelt. Eine Auswerteeinrichtung dient dazu, die als Meßwert bestimmete Resonanzfrequenz und/oder Güte des Mikrowellenresonators einem Feuchtegehalt der Wäsche zuzuordnen.

## Beschreibung

Die Erfindung betrifft eine Wäschepflegeeinrichtung nach dem Oberbegriff von Anspruch 1. Unter Wäschepflegeeinrichtungen werden dabei insbesondere Wäschetrockner, Waschmaschinen, kombinierte Geräte oder auch andere Pflegeeinrichtungen verstanden.

Unter Wäsche ist im Sinne der Erfindung jede Art von Textilien oder Geweben zu verstehen. Gängige Wäschetrockenverfahren arbeiten nach dem Kondensatorprinzip, bei der die in der Wäsche enthaltene Feuchtigkeit durch Wärmezufuhr in die Gasphase überführt und an einem Kondensator als Flüssigkeit wieder auskondensiert wird, bis der Wäsche die Feuchtigkeit in einem gewünschten Maße bzw. bis zu einer gewünschten Trockenstufe entzogen ist. Diesen und auch anderen bekannten Verfahren ist der relativ hohe Energieverbrauch gemein, der zur Überführung der Gesamtfeuchtigkeit in die Gasphase erforderlich ist und der nur teilweise durch Wärmetauschen zurückgewonnen werden kann. Darüber hinaus stellen bekannte Wäschetrockenverfahren eine mechanische und thermische Belastung der Wäsche dar. Moderne Wäschetrockner besitzen daher Einrichtungen, die diese Belastungen der Wäsche sowie den Energieverbrauch minimieren.

Eine Möglichkeit, den Verfahrensfortschritt beim Wäschetrocknen zu kontrollieren, besteht darin, den Feuchtegehalt der Wäsche zu messen und das Meßergebnis entweder zur Anzeige zu bringen oder mit dem Meßergebnis das weitere Verfahren zu steuern und ggf. das Trockenverfahren automatisch zu beenden.

Für die Messung des Feuchtigkeitsgehalts in einem Material sind verschiedene akustische, optische und elektrische Verfahren geeignet. Die Anwendung akustischer Verfahren zur Feuchtemessung von Wäsche haben den Nachteil, daß die akustische Einkopplung der Wellen in die Wäsche sehr schwierig ist. Außerdem weist Wäsche eine hohe Dämpfung akustischer Wellen auf, was eine Messung stark behindert. Optische Verfahren wie Infrarot-Reflexions- und Absorptionsverfahren hingegen können leicht durch Verschmutzung gestört werden. Außerdem sind die Sensoren selbst gegen Feuchte und Wasserdampf empfindlich und zeigen zumeist ein stark temperaturabhängiges Verhalten.

Elektrische Verfahren zur Feuchtebestimmung lassen sich in zwei Untergruppen aufteilen. Zum einen sind dies Verfahren, die den elektrischen Leitwert in Form von Leitfähigkeitsmessungen bestimmen und zumeist unterhalb einer Arbeitsfrequenz von 10 MHz arbeiten. Zum anderen sind dies Meßverfahren, mit denen der komplexe Leitwert bestimmt wird und die eine Arbeitsfrequenz von zumeist oberhalb 100 MHz aufweisen. Die unterschiedlichen Meßfrequenzen ergeben sich dadurch, daß oberhalb einiger 10 MHz der Einfluß der Leitfähigkeit abnimmt und im Gegenzug der Einfluß der dielektrischen Effekte dominierend wird.

Leitfähigkeitsmessungen haben den Nachteil, daß der Leitwert von Wasser durch in Wasser gelöste Substanzen bestimmt wird und daher starken örtlichen und zeitlichen Schwankungen unterworfen ist. Vorteilhaft ist dagegen die Bestimmung der Dielektrizitätskonstante, deren Höhe vornehmlich durch die Menge der Wassermoleküle in der Wäsche bestimmt ist und daher direkt der interessierenden Größe zugeordnet werden kann.

Zur Messung des Feuchtegehalts von Schüttgütern wie Getreide und Beton, von Mauerwerk, Papier und dünnen Materialien sind Mikrowellensensoren bekannt bzw. werden Verfahren angewendet, die mit Mikrowellen arbeiten. Mikrowellensensoren sind beispielsweise aus US 4,991,915, US 4,674,325, US 4,620,146, US 4,484,133 oder EP-A 0 468 023 bekannt. Bei den bekannten Verfahren und Anordnungen handelt es sich um spezielle Ausführungen und Verfahren, die für den Einsatz in Wäschetrocknern nicht vorgesehen und oder nicht geeignet sind. In Verbindung mit Wäschepflegeeinrichtungen werden Mikrowellen bislang nur zum Zweck der Wäschetrockung verwendet.

Aufgabe der vorliegenden Erfindung ist es, eine Wäschepflegeeinrichtung mit einem Feuchtesensor und ein Verfahren anzugeben, mit denen eine sichere und genaue Bestimmung der Wäschefeuchte möglich ist.

Die Aufgabe wird erfindungsgemäß durch eine Wäschepflegeeinrichtung mit den Merkmalen von Anspruch 1 gelöst. Vorteilhafte Ausgestaltungen der Erfindung sowie ein Verfahren zur Bestimmung des Feuchtigkeitsgehalt in Wäsche sind weiteren Ansprüchen zu entnehmen.

Die Erfindung schlägt vor, als Sensor einen Mikrowellenresonator mit einer Sonde vorzusehen, der so in der Nähe oder innerhalb der Wäschetrommel angeordnet ist, daß ein Feld in den Innenraum eingekoppelt wird. Außerdem umfaßt der Feuchtesensor eine Meßschaltung und eine Auswerteeinrichtung, die dem vom Sensor gelieferten Meßwert einen Feuchtegehalt innerhalb der Wäsche zuordnet.

Der erfindungsgemäß verwendete Sensor arbeitet nach dem Streufeldverfahren, welches auf einem Resonanzprinzip basiert. Die Schwingungseigenschaften, insbesondere die Resonanzfrequenz und die Resonanzgüte eines Mikrowellenresonators werden zwar zum einen durch seine direkten physikalischen Eigenschaften wie Größe, Form und Dielektrizitätszahl bestimmt, zum anderen aber auch durch das Medium, mit dem er über sein Streufeld gekoppelt ist. Die elektromagnetischen Felder des Mikrowellenresonators bleiben nicht nur auf die Resonatorstruktur beschränkt, sondern es bildet sich auch ein Streufeld aus. Über das Streufeld kommt es zu einer kontinuierlichen Wechselwirkung zwischen dem Resonator und dem durch das Streufeld angekoppelten Medium. Bei Frequenzen oberhalb einiger 10 MHz ist die komplexwertige Dielektrizitätszahl des umgebenden Mediums die entscheidende Größe für die Beeinflussung des Resonators. Der Betrag der Dielektrizitätszahl von Kleidung liegt etwa in der Größenordnung 2 - 5. Wasser dagegen weist eine wesentlich größere Dielektrizitätszahl von ca. 80 auf. Die Dielektrizitätszahl von feuchter Wäsche ist daher maßgeblich durch den Wasseranteil in der Wäsche bestimmt, so daß über die Messung der Schwingungseigenschaften des Resonators der Feuchtegehalt der Wäsche ermittelt werden kann.

Als Meßgröße zur Bestimmung der Dielektrizitätszahl eignen sich sowohl die Resonanzfrequenz als auch die Resonanzgüte des Resonators, der mit Hilfe der Sonde an das zu messende Medium im Innenraum der Wäschepflegeeinrichtung angekoppelt ist. Der erfindungsgemäß verwendete Sensor umfaßt daher eine Vorrichtung zur Bestimmung der Resonanzfrequenz und/oder der Güte des Mikrowellenresonators.

In bekannten Verfahren zur Feuchtemessung mittels Mikrowellen werden zumeist Hohlraumresonatoren eingesetzt. Für das erfindungsgemäße Verfahren sind als Sonden jedoch im Prinzip alle resonanten Strukturen geeignet. Bevorzugt sind solche Sonden, die sich direkt im Innenraum der Wäschepflegeeinrichtung anordnen lassen, insbesondere planare Resonatoren. Resonatoren, die nicht im Innenraum angeordnet werden können, werden über ein HF-Fenster mit dem Innenraum verbunden. Geeignete resonante Strukturen sind dielektrische Resonatoren, planare Resonatoren oder Antennen (Patch-Antennen), Schlitzstrahler oder auch einfache Monopole, Dipole oder Helix-Antennen. Die Sonde ist vorzugsweise so ausgebildet, daß sie nicht als Antenne fungiert, also keine Mikrowellen ins Fernfeld abstrahlt. Falls eine Strahlung nicht vollständig vermieden werden kann, ist die Sonde vorzugsweise so ausgebildet, daß sie als Antenne als Halb-Rundstrahler fungiert und an das Medium fehlangepaßt ist, also mit einem schlechten Wirkungsgrad ausgeführt ist.

In einer Ausführung der Erfindung ist der Sensor als Reflektorschaltung ausgebildet. Dazu ist ein abstimmbarer Mikrowellengenerator vorgesehen, der über eine Sende-/Empfangsweiche mit der Sonde verbunden ist. Ebenfalls über die Sende/Empfangsweiche ist eine Detektoreinheit angeschlossen, die als Meßwert in Abhängigkeit von der angelegten Frequenz die Reflexion an der Sonde mißt. In der Auswerteeinheit wird aus der frequenzabhängigen Reflexion mindestens eine Resonanzfrequenz bestimmt, die von der Dielektrizitätszahl des angekoppelten Mediums und damit vom Feuchtegehalt der Wäsche abhängig ist. Die Resonanzfrequenz ist die Frequenz mit minimaler Reflexion, also aus der Frequenz, die eine maximale Wechselwirkung mit dem Medium aufweist und dabei eine maximale und zusätzlich noch vom Feuchtegehalt abhängige Dämpfung erfährt. Zur weiteren Auswertung bzw. zur genaueren Bestimmung des Feuchtegehalts kann noch die Amplitude des Meßsignals bei der Resonanzfrequenz herangezogen werden. Die Dämpfung des Meßsignals ist um so höher, je größer der Feuchtegehalt der Wäsche ist. Die Resonanzfrequenz dagegen wird mit zunehmendem Feuchtegehalt niederfrequenter. Von Vorteil ist es daher, für die Auswertung des Meßsignals beide Parameter parallel heranzuziehen und deren Werte in einem Klassifikationsverfahren dem zu bestimmenden Feuchtegehalt zuzuordnen.

Während für eine Reflektorschaltung ein abstimmbarer Mikrowellengenerator erforderlich ist, kommt ein weiteres Ausführungsbeispiel ohne abstimmbaren Generator aus. Wird die Sonde mit einem Rückkoppelnetzwerk verbunden, so wird ein Oszillator erhalten, dessen Schwingfrequenz durch die Resonanzfrequenz des Resonators bestimmt ist. Bei der Messung wird die Schwingfrequenz des Oszillators ermittelt, die der Eigenresonanz des Resonators entspricht und wesentlich von der Dielektrizitätszahl des angekoppelten Mediums beeinflußt wird.

Beispielsweise kann dazu das vom Oszillator erzeugte Taktsignal mit einem Teiler auf eine einfach auswertbare Frequenz heruntergeteilt werden und die Frequenz dann mit einem Zähler gemessen werden.

Ein weiterer Parameter zur Steuerung eines Wäschetrockenverfahrens in einer Wäschepflegeeinrichtung ist der Befüllungsgrad der Wäschetrommel. Ist dieser bekannt, so kann zusammen mit dem Feuchtegehalt der Wäsche auf die absolute Wassermenge in der Wäschetrommel zurück gerechnet werden. In Weiterbildung der Erfindung wird vorgesehen, den Befüllungsgrad zusammen mit dem Feuchtegehalt der Wäsche mit dem gleichen Sensor zu bestimmen. Dazu werden mehrere Sonden in unterschiedliche Höhe nahe an oder in der Wäschetrommel angeordnet, die getrennt angesteuert werden können und die voneinander unabhängige Meßwerte liefern. Dabei ist es möglich, nur die Anzahl der Sonden zu erhöhen und diese über eine gemeinsame Meßschaltung mit der Auswerteeinrichtung zu verbinden. Das Ansteuern einer gewünschten Sonde kann dabei mit geeigneten Schaltmitteln vorgenommen werden.

Die Auswertung der Meßwerte der unterschiedlichen Sonden erlaubt einen Rückschluß auf den Befüllungsgrad des Trockners. Die einfachste Möglichkeit besteht darin, jede Meßsonde in Form eines Präsenzschalters auszuwerten, der dann lediglich zwischen zwei Zuständen detektiert. Mit der Sonde wird dann festgestellt, ob im Bereich vor der Meßsonde (feuchte) Wäsche vorhanden ist oder nicht. Dieses Meßverfahren ist insbesondere dann sicher auszuwerten, wenn das Streufeld des Resonators eine nur geringe Eindringtiefe in die Wäschetrommel aufweist. Je größer die Eindringtiefe des Streufelds und damit das vom Streufeld durchdrungene Volumen innerhalb der Wäschetrommel ist, desto mehr Mischzustände müssen unterschieden werden. Mit größerer Eindringtiefe wird es allerdings möglich, sämtliche Meßwerte der unterschiedlichen Sonden zur Auswertung heranzuziehen und aus dem Signalverhältnis der Meßwerte mit einem geeigneten Klassifikationsverfahren auf den Befüllungsgrad zu schließen. Diese Auswertung kann bereits mit zwei in unterschiedlicher Höhe angeordneten Sonden vorgenommen werden. Als Referenzwert bei der Auswertung kann die Resonanzfrequenz an der Sonde bzw. die Resonanzfrequenz des Resonators bei leerer Wäschetrommel herangezogen werden. Dieser Referenzwert kann zur Festlegung der Schaltschwelle bei der digitalen Auswertung verwendet werden.

In einer weiteren Ausgestaltung der Erfindung wird zur Bestimmung des Füllgrades der Wäschetrommel ein als Radar ausgeführter Sensor verwendet. Dieser wird vorzugsweise im unteren oder im oberen Teil der Wäschetrommel angeordnet und liefert zwei Echos, nämlich die Reflexionen an der oberen Füllgrenze der Wäsche und an der Innenwand der Wäschetrommel. Über die Echos wird die dazugehörige Laufzeit der Mikrowellen berechnet und daraus die entsprechende Entfernung zur Wäscheoberfläche und zur Trommelwand. Mit der gleichen Sensorelektronik können darüber hinaus die Impedanz bzw. der Reflexionsfaktor der Antenne bestimmt werden, über den wiederum auf den Feuchtegehalt der Wäsche geschlossen werden kann. Möglich ist es beispielsweise, für das Radar die im ersten Ausführungsbeispiel beschriebene Reflektorschaltung zu verwenden. Dabei ist es möglich, für die Messung der Reflexion, für die keine Abstrahlung in die Wäschetrommel erforderlich ist, eine andere Resonanzmode zu verwenden bzw. die Radarmessung bei einer Frequenz durchzuführen, die in einem anderen Frequenzbereich als dem für die Reflexionsmessung verwendeten Frequenzbereich. Somit ist es möglich, für die beiden Verfahren die gleiche Sonde bzw. Antenne zu verwenden, die ggf. in Abhängigkeit von der angelegten Frequenz als Sonde oder Antenne fungiert.

Im folgenden wird das Verfahren zur Feuchtemessung anhand von Ausführungsbeispielen und dazugehörigen Figuren näher erläutert.
Figur 1 zeigt in schematischer Darstellung eine erfindungsgemäße Einrichtung mit Reflektorschaltung
Figur 2 zeigt in schematischer Darstellung einen zur Resonanzmessung geeigneten Schwingkreis
Figur 3 zeigt Meßkurven einer Reflektorschaltung bei verschiedenen Feuchtegehalten
Figur 4 zeigt in einem Diagramm die Abhängigkeit der Resonanzfrequenz vom Feuchtegehalt
Figur 5 zeigt eine Wäschepflegeeinrichtung mit mehreren Sonden zur Bestimmung des Befüllungsgrads
Figur 6 zeigt eine Einrichtung mit einer Radarabstandsmeßeinrichtung.

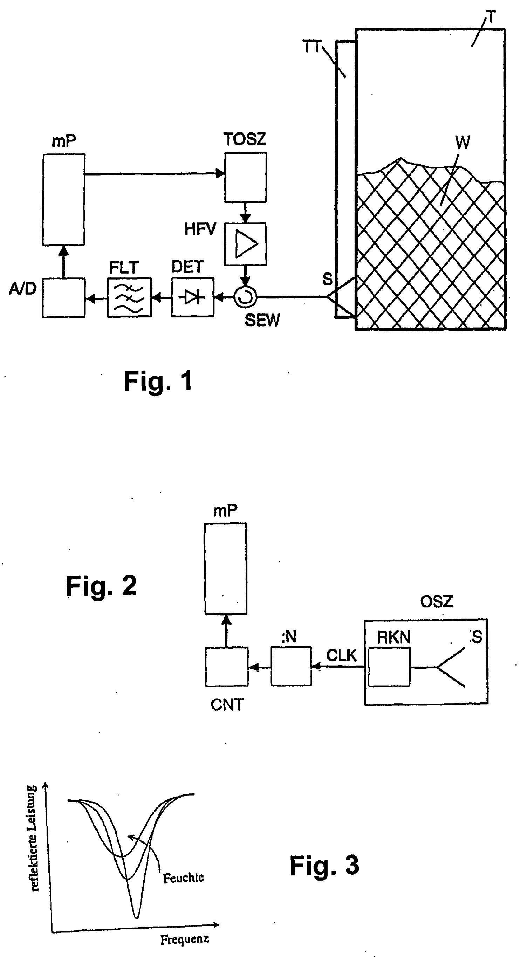

Figur 1 zeigt ein erstes Ausführungsbeispiel der Erfindung. Die Wäsche W ist in einer Wäschetrommel T angeordnet, beispielsweise einem rotationssymmetrischen Körper mit waagerecht innerhalb der Darstellungsebene liegender Rotationsachse. Die Wäschetrommel T ist im Innenraum einer Wäschepflegeeinrichtung angeordnet. Mit der Tür TT ist entweder die Wäschetrommel innerhalb der Wäschepflegeeinrichtung oder alternativ der Innenraum der Wäschepflegeeinrichtung verschlossen. Im unteren Bereich der Wäschetrommel, hier im unteren Bereich der Türe TT, ist eine Sonde S angeordnet, die ein Feld in die Wäsche W einkoppelt. Mit der Sonde S ist eine Reflektorschaltung verbunden, die die Stärke der Reflexion an der Sonde in Abhängigkeit von der angelegten Frequenz mißt. Hierzu wird mit einem Prozessor mP ein in seiner Frequenz abstimmbarer Mikrowellenoszillator TOSZ über eine Frequenz von z.B. 100 bis 200 MHz durchgestimmt. Die verwendbaren Mittenfrequenzen liegen bei ca. 100 MHz - 3 GHz. Das Mikrowellensignal wird über einen Hochfrequenzverstärker HFV und eine Sende/Empfangsweiche SEW zur Sonde S geleitet. Das reflektierte Signal gelangt ebenfalls über die Sende/Empfangsweiche SEW, in der es vom Sendesignal getrennt wird, auf die Detektorschaltung DET. Die Detektorschaltung liefert ein Detektorsignal, welches zur Abtrennung höherfrequenter Oberschwingungen über einen Filter FLT geleitet wird, welches als Lowpassfilter ausgebildet ist. Am Ende des Filters wird eine Meßspannung als Meßsignal erhalten, die ein Maß für die reflektierte Signalleistung ist. Das Meßsignal wird mit einem A/D-Wandler in einen Prozessor mP eingelesen und ausgewertet. Die Auswertung kann über eine einzige ausgewählte Resonanzfrequenz erfolgen. Möglich ist es jedoch auch, andere, auf anderen Resonanzfrequenzen beruhende Moden parallel auszuwerten. In dem als Auswerteeinheit verwendeten Prozessor mP wird über einen geeigneten Algorithmus mit Hilfe der Meßwerte die Wäschefeuchte bestimmt.

Figur 2 gibt eine weitere Meßschaltung an, die mit einer z. B. gemäß Figur 1 angeordneten Sonde S verbunden werden kann. Hierbei bilden der Resonator bzw. die Sonde S und ein Rückkoppelnetzwerk RKN zusammen einen Oszillator, dessen Schwingungsfrequenz durch die Resonanzfrequenz des Resonators bestimmt wird. Auf diese Weise wird ein Oszillatortaktsignal CLK erhalten. Dieses wird im Ausführungsbeispiel mit einem Teiler: N auf eine einfach auswertbare Frequenz heruntergeteilt und die der Frequenz entsprechenden Zählsignale dann mit einem Zähler CNT gemessen. Das Ergebnis wird an die Auswerteeinheit bzw. den Prozessor mP weitergeleitet und dort mit dem geeigneten Algorithmus der Wäschefeuchte zugeordnet. Möglich ist es auch, Umschaltmittel vorzusehen, die den Schwingkreis in verschiedenen Moden arbeiten lassen.

Figur 3 zeigt verschiedene Meßkurven, bei denen das Meßsignal der in Figur 1 dargestellten Reflektorschaltung als Funktion der Frequenz bei verschiedenen Feuchtegehalten der Wäsche bestimmt ist. Mit zunehmender Feuchte wird mehr Leistung reflektiert, gleichzeitig sinkt die Resonanzfrequenz.

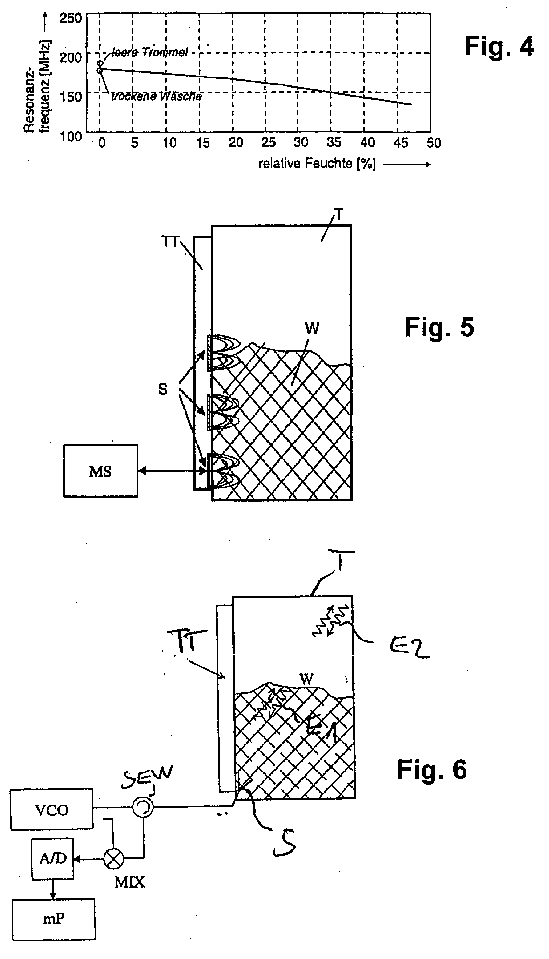

Figur 4 zeigt die Abhängigkeit der Resonanzfrequenz von der in Prozent angegebenen relativen Feuchte der Wäsche. Es ergibt sich ein zumindest streckenweise linearer Zusammenhang, der die Auswertung erleichtert. Ein weiterer singulärer Meßwert LT gibt die Resonanzfrequenz der leeren Wäschetrommel an, die gegenüber einer teilweise oder ganz gefüllten Wäschetrommel noch einmal erhöht ist.

Figur 5 gibt ein weiteres Ausführungsbeispiel an, bei dem zusätzlich zu der wie beispielsweise in Figur 1 ausgebildeten Sonde S weitere Sonden in unterschiedlicher Höhe der Trommel T angeordnet sind, vorzugsweise im Bereich der Türe TT. Jede der Sonden S erzeugt ein eigenes Streufeld innerhalb der Wäschetrommel T, auf das die Dielektrizitätszahl des im Bereich des Streufelds angeordneten Mediums impedanzbestimmend einwirkt und mit zunehmender Dielektrizitätszahl bzw. zunehmendem Feuchtegehalt der Wäsche die reflektierte Leistung erhöht bzw. die dazugehörige Resonanzfrequenz an der Sonde S erniedrigt. Die Auswertung der durch die Sonden bestimmten Meßwerte erfolgt mit einer Meßschaltung MS.

Figur 6 zeigt eine Anordnung, mit der als weitere Meßinformation der Befüllungsgrad der Wäschetrommel T ermittelt werden kann. Dazu wird eine als Antenne wirkende Sonde S im unteren Bereich der Wäschetrommel T angeordnet. Dabei wird mit einem spannungsgesteuerten Oszillator VCO über eine Sende/Empfangsweiche SEW ein Mikrowellensignal auf die Sonde S gegeben. Die auch als Antenne wirkende Sonde S liefert das nach Reflexionen in der Wäschetrommel empfangene Signal über die Sende/Empfangsweiche SEW zu einem Mixer MIX, bei dem das empfangende Signal mit dem Ausgangssignal gemischt wird. Das Meßsignal wird wieder über einen A/D-Wandler auf den als Auswerteeinheit dienenden Prozessor mP gegeben. Die aus herkömmlichen Radarmessungen bekannte Auswertung ergibt die Radarechos E1 und E2, die der oberen Füllgrenze der Wäsche bzw. der der Sonde S gegenüberliegenden Wand der Trommel T entsprechen. Über die Radarechos läßt sich der Abstand der das Echo E1 erzeugenden Obergrenze der Wäschebefüllung von der Sonde S ermitteln, welcher mit Hilfe des zweiten Echowerts, nämlich dem Abstand der Trommelwand, den Befüllungsgrad der Wäsche in der Trommel T ergibt. Mit derselben Sensorelektronik kann darüber hinaus wie oben beschrieben die Impedanz und damit der Reflexionsfaktor der Antenne bestimmt werden und basierend darauf der Feuchtegehalt der Wäsche gemessen werden.

Zur Auswertung bei diesen und allen anderen Verfahren werden die Meßdaten einem Klassifikator zugeführt, der die erhaltenen Meßwerte bestimmten Parametern des Trocknungsprozesses zuordnet. Dazu eignen sich im Prinzip alle bekannten Klassifikationsverfahren, beispielsweise numerische Klassifikationsverfahren, Fuzzy-Klassifikationsverfahren und Klassifikationsverfahren mit neuronalen Netzen. Bevorzugt ist die Auswertung über trainierbare neuronale Netze, da sie für die beschriebenen Meßanordnungen vergleichsweise einfach anzupassen sind und anhand von Beispielen trainiert werden können. Durch die Fähigkeit der neuronalen Netze, das durch Training erhaltene Wissen sozusagen assoziativ zu speichern, sind sie in der Lage, auch komplexe Zusammenhänge zwischen den Meßgrößen und den Parametern des Trocknungsprozesses abzubilden, ohne daß die Zusammenhänge analytisch bekannt sein müssen.

Die Auswertung der Meßdaten erfolgt vorzugsweise in einer Recheneinheit, die ihrerseits wieder das Trocknungsverfahren in der Wäschepflegeeinrichtung steuern kann. In diese Steuerung können noch weitere sensorische Größen einbezogen werden, etwa die Temperatur in der Wäschetrommel bzw. in der feuchten Wäsche, Daten über Trommelbewegungen und andere mehr, die geeignet sind, etwaige störende Einflüsse zu minimieren. Mit Hilfe dieser Steuerung ist es beispielsweise möglich, das Verfahren bei Erreichen einer gewünschten Trocknungsstufe bzw. einem gewünschten, einstellbar niedrigen Feuchtegehalt automatisch zu beenden.

Die für die genannten Meßverfahren verwendete Sonde ist vorzugsweise so ausgelegt, daß sie auf einer großen Fläche ein Streufeld mit möglichst großer Tiefe erzeugen kann. Besonders geeignet haben sich dazu zickzackförmige Strukturen erwiesen, die der 2D-Abbildung einer 3D-Helixantenne entsprechen. Bei dieser Sondenform wird die Resonanzfrequenz des Resonators maßgeblich durch die Länge der Leitung bestimmt. Durch die vielen Unstetigkeiten im Leitungsverlauf ergibt sich ein ausgeprägtes Streufeld. Weiterhin ist es von Vorteil, auf der Rückseite der Sonde ein Dielektrikum mit sehr niedriger Dielektrizitätszahl anzuordnen, das nur sehr geringe Verluste aufweist. Nur dann ist gewährleistet, daß der Einfluß dieses Materials nicht den Einfluß der nur schwach angekoppelten Wäsche überdeckt und damit die Messung erschwert. In der Wäschepflegeeinrichtung ist es beispielsweise günstig, die Zickzacksonde direkt auf das Kunststofflagerschild der Wäschetrommel T oder ein sonstiges während des Betriebs der Wäschetrommel nicht bewegtes Teil aufzubringen.

Die Erfindung konnte nur anhand weniger Ausführungsbeispiele beschrieben werden, ist jedoch nicht auf diese beschränkt. Im Rahmen der Erfindung liegt es daher auch, weitere entsprechend Anspruch 1 aufgebaute Feuchte-Sensoren auf Mikrowellenbasis in Wäschepflegeeinrichtungen vorzusehen, die ebenfalls auf dem Streufeldverfahren beruhen, jedoch andere Auswerteverfahren nützen. Solche allgemeinen Auswerteverfahren sind aus der Mikrowellensensorik bekannt und können für die Erfindung verwendet werden.

## Patentansprüche

1. Wäschepflegeeinrichtung mit
einem geschlossenen, eine Wäschetrommel (T) enthaltenden Innenraum
einer Einrichtung zum Entzug von Feuchtigkeit aus der Wäsche (W) und
einem Sensor zur Erkennung des Feuchtegehalts der Wäsche, **dadurch gekennzeichnet,**
**daß** der Sensor einen Mikrowellenresonator (TOSZ) mit einer Sonde (S) zur Einkopplung eines elektromagnetischen Streufeldes in den Innenraum, eine Meßschaltung (DET,FLT,A/D;:N,CNT) zur Bestimmung von Parametern des Mikrowellenresonators und eine Auswerteeinrichtung (mP) zur Bestimmung eines Feuchtegehalts in der Wäschetrommel aus den gemessenen Parametern umfaßt.

2. Einrichtung nach Anspruch 1,
bei der die Meßschaltung (DET,FLT,A/D;:N,CNT) zur Bestimmung der Resonanzfrequenz und/oder der Güte des Mikrowellenresonators (S) ausgelegt ist.

3. Einrichtung nach einem der Ansprüche 1 oder 2,
bei der Mikrowellenresonator (S) ein planarer innerhalb des Innenraums angeordneter Resonator ist.

4. Einrichtung nach einem der Ansprüche 1 oder 2,
bei der der Mikrowellenresonator (S) außerhalb des Innenraums angeordnet ist und über ein HF-Fenster an den Innenraum angekoppelt ist.

5. Einrichtung nach einem der Ansprüche 1 bis 4,
bei der die Meßschaltung als Reflektorschaltung (DET,FLT,A/D) ausgebildet ist, einen über eine Sende/Empfangsweiche (SEW) mit der Sonde (S) verbundenen abstimmbaren Mikrowellen-Generator (TOSZ) und eine an die Sende/Empfangsweiche angeschlossene Detektoreinheit (DET), die als Meßwert in Abhängigkeit von der angelegten Frequenz die Reflexion an der Sonde (S) mißt, umfaßt.

6. Einrichtung nach einem der Ansprüche 1 bis 4,
bei der der Mikrowellenresonator (S) mit einem Rückkoppelnetzwerk (RKN) verbunden ist und mit diesem zusammen einen Oszillator bildet,
bei der die Meßschaltung (:N,CNT) zur Bestimmung der Resonanz-Frequenz des Oszillators vorgesehen ist, und
bei der die Auswerteeinheit (mP) zur Zuordnung der Resonanz-Frequenz zu einem Feuchtegehalt der Wäsche ausgebildet ist.

7. Einrichtung nach einem der Ansprüche 1 bis 6,
bei der mehrere Sonden (S) in unterschiedlichen Höhen des Innenraums angeordnet sind, die unabhängig voneinander Meßwerte liefern, und bei der die Auswerteeinheit (mP) den unterschiedlichen Meßwerten eine Füllhöhe in der Wäschetrommel (T) zuordnen kann.

8. Einrichtung nach einem der Ansprüche 1 bis 7,
bei der eine als Radar ausgebildete Einrichtung (S) zur Bestimmung der Füllhöhe in der Wäschetrommel (T) vorgesehen ist.

9. Verfahren zur Bestimmung des Feuchtegehalts von Wäsche (W) in einer Wäschepflegeeinrichtung,
- bei dem die Wäsche in einer Wäschetrommel (T) vorgelegt wird
- bei dem mit einem Mikrowellengenerator (TOSZ) über eine Sonde (S) ein Streufeld völlig oder weitgehend strahlungsfrei in die Wäschetrommel (T) eingekoppelt wird,
- bei dem das in die Wäschetrommel eingekoppelte Streufeld die Resonanzeigenschaften der Sonde beeinflußt
- bei dem die Resonanzfrequenz bestimmt und einem Feuchtegehalt in der Wäsche zugeordnet wird.

10. Verfahren nach Anspruch 9,
- bei dem die Frequenz des angelegten Feldes über einen gegebenen Frequenzbereich variiert wird,
- bei dem die Reflexion an der Sonde (S) in Abhängigkeit von der Frequenz mit einer Reflektorschaltung (DET,FLT,A/D) detektiert und
- bei dem die detektierte Reflexion in einer Auswerteeinheit (mP) einem Feuchtegehalt zugeordnet wird.

11. Verfahre nach Anspruch 9,
bei dem die Sonde (S) mit einem Rückkoppelnetzwerk (RKN) zusammen einen Oszillator (OSZ) bildet, und bei dem die Resonanzfrequenz des Oszillators einem Feuchtegehalt zugeordnet wird.

12. Verfahren nach Anspruch 9 oder 10,
bei dem der Mikrowellengenerator (TOSZ) ausgehend von einer Mittenfrequenz während der Messung um eine Frequenz von 100 bis 200 MHz variiert wird.

13. Verfahren nach einem der Ansprüche 9 bis 12,
bei dem die Reflexion an mehreren Sonden (S) unabhängig voneinander in unterschiedlichen Höhen der Wäschetrommel (T) gemessen wird und bei in der Auswerteeinheit (mP) unterschiedliche von den Sonden gelieferte Meßwerte einem Befüllungsgrad in der Wäschetrommel zugeordnet werden und bei dem der Feuchtegehalt und der Befüllungsgrad als Steuerparameter zur Verfahrenssteuerung der Wäschepflegeeinrichtung verwendet werden.

14. Verfahren nach Anspruch 9 bis 13,
bei dem aus der an der Sonde (S) reflektierten Leistung in einem Detektor (DET) ein Detektorsignal erzeugt wird,
bei dem das Detektorsignal in einem als Low Passfilter (FLT) ausgebildeten Frequenzfilter von höherfrequenten Oberschwingungen getrennt wird und über einen A/D Wandler (A/D) der Auswerteeinheit (mP) zugeführt wird.

15. Verfahren nach einem der Ansprüche 9 bis 14,
der Meßwert aus dem Detektor (DET) mit einem Klassifikationsverfahren dem Feuchtegehalt zugeordnet wird, wobei ein trainierbares Klassifikationsverfahren, ein Fuzzyverfahren oder ein neuronales Netz verwendet wird.
